(19) Europäisches Patentamt / European Patent Office / Office européen des brevets

(11) **EP 3 012 963 B1**

(12) **EUROPEAN PATENT SPECIFICATION**

(45) Date of publication and mention
of the grant of the patent:
**29.07.2020  Bulletin 2020/31**

(51) Int Cl.:
*H02P 9/00* (2006.01)    *H02J 3/24* (2006.01)

(21) Application number: **15190082.6**

(22) Date of filing: **16.10.2015**

(54) **SYSTEMS AND METHODS FOR SWING ANGLE ESTIMATION IN AN ELECTRICAL POWER SYSTEM**

SYSTEME UND VERFAHREN ZUR SCHÄTZUNG DES SCHWENKWINKELS IN EINEM ELEKTRISCHEN STROMVERSORGUNGSSYSTEM

SYSTÈMES ET PROCÉDÉS POUR UNE ESTIMATION DE L'ANGLE D'OSCILLATION DANS UN SYSTÈME D'ALIMENTATION ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **21.10.2014  US 201414519526**

(43) Date of publication of application:
**27.04.2016  Bulletin 2016/17**

(73) Proprietor: **General Electric Company**
**Schenectady, NY 12345 (US)**

(72) Inventors:
• **PAN, Yan**
**Niskayuna, NY New York 12309 (US)**
• **PREMERLANI, William James**
**Scotia, NY New York 12302 (US)**

(74) Representative: **Openshaw & Co.**
**8 Castle Street**
**Farnham, Surrey GU9 7HR (GB)**

(56) References cited:
EP-A2- 0 869 599        US-A1- 2006 067 095
US-A1- 2013 066 480     US-A1- 2014 118 864

• **Normann Fischer ET AL: "Tutorial on Power Swing Blocking and Out-of-Step Tripping", 39th Annual Western Protective Relay Conference Spokane, 1 October 2012 (2012-10-01), pages 1-20, XP055384082, Spokane, Washington**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

An electrical power system operates under a steady-state condition when there exists a balance between generated and consumed active power for the system. Power system disturbances may cause oscillations in machine rotor angles that can result in conditions like a power swing, when internal voltages of system generators slip relative to each other. Power system faults, line switching, generator disconnection, or the loss or sudden application of large amounts of load are examples of system disturbances that may cause a power swing event to occur in a power system. Depending on the severity of the disturbance and power system control actions, the system may return to a stable state or experience a large separation of load angle and eventually lose synchronism. Large power swings, stable or unstable, may cause unwanted relay operations at different locations in the system, which can aggravate the system disturbance and can result in major power outages or blackouts.

Further, asynchronous operation of interconnected generators in the power system as an effect of unstable power swing may initiate uncontrolled tripping of circuit breakers resulting in equipment damage and posing a safety concern for utility operators. Therefore, the asynchronous system areas may need to be separated from each other quickly and dynamically in order to avoid extensive equipment damage and shutdown of major portions of the system. In order to contain these risks, it is required as per international standards to have an optimal generator protection device, such as a generator relay, in place to isolate generators from the rest of the system within a half-slip cycle. The need to meet the international standards challenges protection engineers to ensure selective and reliable relay operation.

In a conventional relaying approach, a variation in system impedance determined at generator terminals is analyzed for detecting power swing. Various impedance-based protection approaches including power swing block (PSB) and out-of step trip (OST) are currently being used. However, these protection approaches may need an power system stability study to arrive at an optimal setting for selective and reliable relay operation. Protection engineers typically use preliminary settings that are not adapted to accommodate variation in system configurations or operational dynamics, for example, changes in transmission and distribution layout during implementation phase or dynamically during operational phase. Extensive study and non-dynamic preliminary settings may result in the protection device being unable to selectively, reliably and dependably detect power swings and isolate generators during such events.

Other known relaying approaches estimate swing center voltage (SCV) for detecting power swings. Such approaches use approximate estimation that does not take into consideration real time power system dynamics. In some relaying approaches, a high-speed communication network such as fiber optic or global positioning system (GPS) communication is used to obtain data at a source end from one or more generators at receiving end(s), which is at a remote location from the source end, for SCV estimation. However, such approaches have economic challenges due to the cost associated with implementing and maintaining a high-speed communication network. Some approaches for SCV directly measure the rotor angle between the generator's internal voltage and terminal voltage for detecting power swing. In the absence of direct measurements, it is difficult to determine the power swing condition.

EP 0869599 describes a method for detecting an out-of-step in an electric power system comprising two power systems, the method including the steps of, measuring a voltage and a current of the electric power system at regular intervals, computing a phase angle between the measured voltage and the current, determining a change in the phase angle difference at predetermined intervals and determining that an out-of-step has occurred between the two power systems when the change amount in the phase angle difference is below a predetermined threshold value for detecting a sudden change in phase angle and the phase angle difference is above a preset out-of-step phase angle difference.

BRIEF DESCRIPTION

The present invention resides in a method, a power swing detection device and an electrical power system as defined in the appended claims.

DRAWINGS

These and other features and aspects of embodiments of the present invention will become better understood when the following detailed description is read with reference to the accompanying drawings in which like characters represent like parts throughout the drawings, wherein:

Fig. 1 depicts an electrical power system having multiple generators inter-connected in a mesh arrangement, in accordance with one embodiment.

Fig. 2 is a block diagram of a power swing detection device, in accordance with one embodiment.

Fig. 3 represents a two-source system and a vector phasor representation of the two-source system, in accordance with one embodiment of the invention.

Fig. 4 is a flowchart depicting a method for detection of power swing in the electrical power system, in accordance with one embodiment of the invention.

DETAILED DESCRIPTION

Unless defined otherwise, technical and scientific terms used herein have the same meaning as is commonly understood by one of ordinary skill in the art to which this disclosure belongs. The terms "first", "second", and the like, as used herein do not denote any order, quantity, or importance, but rather are used to distinguish one element from another. Also, the terms "a" and "an" do not denote a limitation of quantity, but rather denote the presence of at least one of the referenced items. The term "or" is meant to be inclusive and mean one, some, or all of the listed items. The use of terms such as "including," "comprising," or "having" and variations thereof herein are meant to encompass the items listed thereafter and equivalents thereof as well as additional items. The term "module" or "controller" refers to software, hardware, or firmware, or any combination of these, or any system, process, or functionality that performs or facilitates the processes described herein.

Additionally, for purposes of explanation, specific numbers, materials, and configurations are set forth in order to provide a thorough understanding of various embodiments of the invention. The skilled artisan will recognize the interchangeability of various features from different embodiments. Similarly, the various method steps and features described for each such methods and features, can be mixed and matched by one of ordinary skill in this art to construct additional assemblies and techniques in accordance with principles of this disclosure.

Various embodiments of the present technique provide devices and methods to detect a power swing condition (herein referred to as "power swing") in an electrical power system based on local measurements and one or more system parameters. In various embodiments, the devices and methods may obtain local measurements including a voltage phasor ($V_S$) of a source-end generator in the electrical system and a current phasor ($I_S$) of the source-end generator. Various embodiments may further estimate one or more system parameters such as a transmission line impedance ($Z_L$) between a source-end generator and a receiving-end generator and furthermore, a receiving end generator impedance ($Z_R$), for example. In some embodiments, a swing angle ($\theta$) between an internal voltage ($E_S$) of the source-end generator and an internal voltage ($E_R$) of the receiving-end generator may be estimated as a function of the obtained voltage $V_S$, the obtained current $I_S$ and an estimated total impedance ($Z = Z_L + Z_R$). In certain embodiments, a power swing condition may be then detected based on the estimated value of $\theta$.

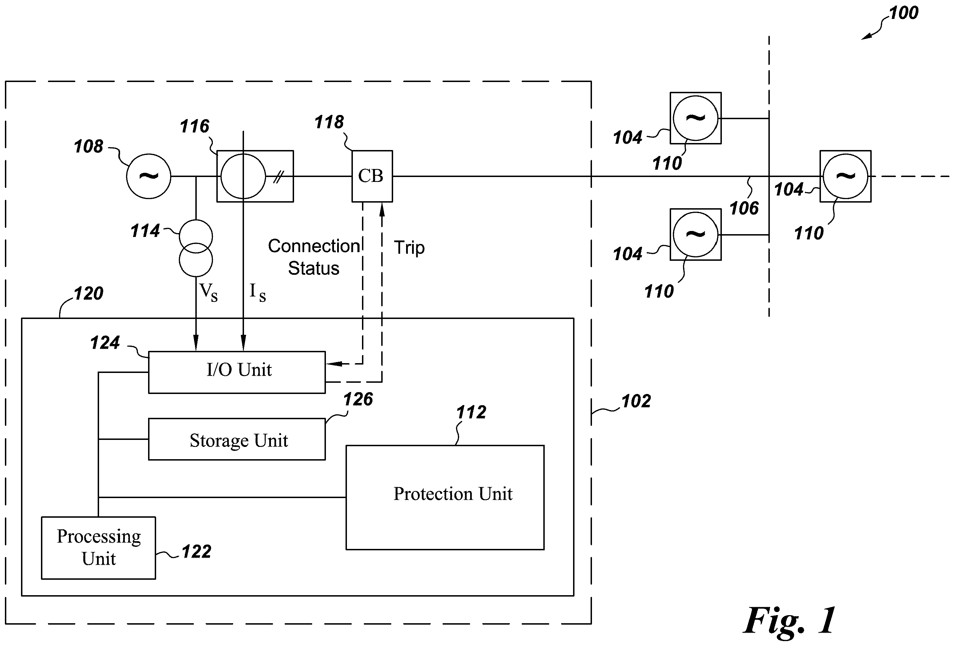

Fig. 1 depicts an electrical power system 100 (herein referred to as "system 100") having multiple generators 110 and 108 inter-connected in a mesh arrangement, in accordance with one embodiment of the invention. The system 100 may be used for interconnecting alternating current (AC) power grids or microgrids. As shown in Fig. 1, in some embodiments, the system 100 may include a source-end 102 and one or more receiving-ends 104. The term "source-end" as used herein refers to a transmitting end of the system 100 and the term "receiving-end" refers to an end that receives power transmitted from the source-end 102 via a transmission link 106 such as, but not limited to, a transmission cable or a transmission line. As shown in Fig. 1, the source-end 102 includes a generator 108 (herein referred to as a "source-end generator 108") and each receiving-end 104 includes a generator 110 (herein together referred to as "receiving-end generator(s) 110") configured to be electrically coupled to the source-end generator 108. It will be apparent to a person skilled in the art that power swing may occur between any two generators (for example, between the source-end generator 108 and any of receiving-end generators 110) or between two groups of generators. Although Fig. 1 illustrates three receiving-end generators 110, any number of receiving-end generators may be deployed without deviating from the scope of the technique. Similarly, a plurality of source-end generators may be deployed in the system 100 instead of a single source-end generator 108 shown in Fig. 1, in accordance with some embodiments of the invention. In such embodiments, every source-end generator may include, or be coupled to, a protection unit as described later.

A power swing is a system phenomenon that is observed when a phase angle (herein referred to as a "swing angle") of one power source starts to vary in time with respect to another source in the same electrical system network. In some embodiments, the source-end generator 108 and one of the receiving-end generator 110 may be the two power sources. The term "swing angle ($\theta$)" herein refers to a phase angular separation between an internal voltage ($E_S$) of the source-end generator 108 and an internal voltage ($E_R$) of any of the receiving-end generators 110. When a two-source system loses stability and enters an out-of-step (OOS) condition, the angle difference (given by $\theta$) of the two generators, for example, the source-end generator 108 and any of receiving-end generators 110 may increase as a function of time. Therefore, $\theta$ provides information about power swing condition in an electrical power system, in accordance with some embodiments.

Components illustrated in the system 100 are exemplary and the system 100 may also include various other components (not shown in Fig. 1) such as, but not limited to, a turbine connected to the source-end generator 108, an automatic voltage regulator (AVR), a step-up transformer, a line-side breaker, and one or more electrical loads, for example.

The source-end 102 further includes a voltage transformer 114 for measuring a voltage phasor ($V_S$) of the source-end generator 108, and a current transformer 116 for measuring a current phasor ($I_S$) of the source-end generator 108. Although a single voltage transformer 114 and a single current transformer 116 are shown in Fig. 1, it will be appreciated by those skilled in the art that any number of current and voltage transformers may be deployed in the system 100 for sensing the local parameters such as $I_S$ and $V_S$. The term "local measurement" herein refers to a parameter that can be measured within the source-end 102 without the need to communicate with receiving-end generators 110. It should be noted that the voltage phasor and the current phasor refer to magnitude and phase angle of voltage and current signals. In some embodiments, the phase angle is separately calculated in a processing system.

As shown in Fig. 1, the system 100 further includes a circuit breaker (CB) 118 at the source-end 102. In some embodiments, the circuit breaker 118 is configured to electrically couple/decouple the source-end generator 108 with/from the receiving-end generators 110. In some embodiments, the circuit breaker 118, the voltage transformer 114 and the current transformer 116 measure the corresponding data (such as, connection status, Vs, Is, and the like) in real-time. As will be described later, the system 100 may also estimate a system parameter such as a transmission line impedance ($Z_L$) between a source-end generator and a receiving-end generator and furthermore, a receiving end generator impedance ($Z_R$), for example. This estimation may be performed in real-time, in accordance with some embodiments. In one embodiment, real-time may refer to the occurrence of event instantaneously, for example, in the order of milliseconds or microseconds. In another embodiment, real-time may be near real-time having a predetermined tolerance (for example, two percent) with respect to instantaneous real-time. In one exemplary embodiment where the data is received near real-time, a utility operator or a protection engineer viewing the data (for example at an I/O terminal) may not perceive any delay during display of data.

As shown in Fig. 1, the system 100 further includes a power swing detection device 120 (herein referred to as "device 120") at the source-end 102. The term "power swing detection device" as used herein refers to a component that is configured to detect power swing and protect the source-end generator 108 during power swing condition. This protection may be achieved by triggering the circuit breaker 118 to trip or by triggering an alarm, when such power swing condition is detected. Tripping the circuit breaker 118 may result in the source-end generator 108 being isolated or decoupled from the rest of the system 100. The device 120 may be a protection relay, such as, but not limited to, a digital, numeric, static, or electromechanical protection relay, in accordance with some embodiments.

Further, as illustrated in Fig. 1, the device 120 may include a processing unit 122 and an I/O unit 124, where the processing unit 122 may analyze data that is received at and transmitted from the I/O unit 124. The processing unit 122 may include, for example, one or more application-specific processors, graphical processing units, digital signal processors, microcomputers, microcontrollers, application specific integrated circuits (ASICs), field programmable gate arrays (FPGAs), or other suitable devices in communication with one or more components of the system 100. The I/O unit 124 may comprise one or more human I/O devices, which enable a utility operator or a protection engineer to communicate with the device 120 or one or more communications devices using any type of communications link. In some embodiments, the I/O unit 124 interfaces with the voltage transformer 114, the current transformer 116, and the circuit breaker 118 to receive local parameters (such as the $V_S$, the $I_S$) and the connection status, respectively. $V_S$ and $I_S$ may be analog inputs, for example, in the form of sine waveforms or square pulses, in accordance with certain embodiments. In one embodiment, the I/O unit 124 is configured to filter noise and then convert the filtered analog input into digital samples. In another embodiment, during the power swing condition, the I/O unit 124 is configured to trigger an alarm, or send a trip command to the circuit breaker 118 to trip the circuit breaker 118, or activate any other protection mechanism to protect the system.

The device 120 may further include a protection unit 112 and a storage unit 126. In some embodiments, the protection unit 112 executes program code, such as a swing detection scheme residing in the storage unit 126. In some embodiments, the protection unit 112 is a relay that is provided with a swing detection scheme to detect whether the system 100 is approaching power swing condition between the source-end generator 108 and any of the receiving-end generators 110 or not. In some alternate embodiments, the processing unit 122 may execute this swing detection scheme. In certain embodiments, the processing unit 122 stores the received, processed, and transmitted data to, or reads from, the storage unit 126, such as a hard disk drive, a floppy disk drive, a compact disk-read/write (CD-R/W) drive, a digital versatile disc (DVD) drive, a flash drive, or a solid-state storage device. In some embodiments, the processing unit 122 may be integrated with the protection unit 112.

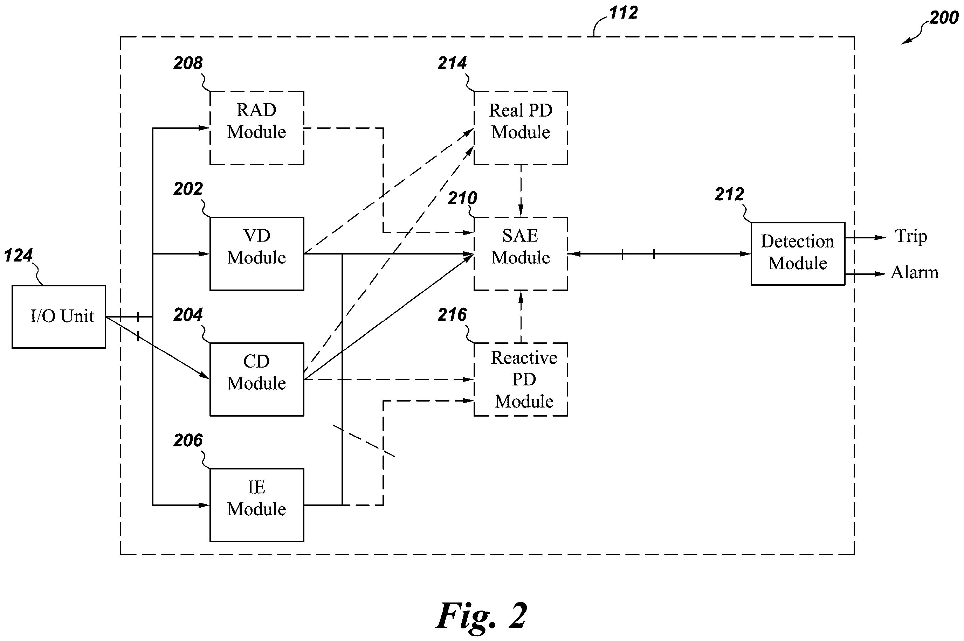

Various embodiments of the invention deploy the swing detection scheme in the device 120 that is configured to detect a power swing condition based on real-time data measurements including $V_S$, $I_S$, $Z_L$, and $Z_R$. The term "swing detection scheme" herein refers to logic defined to detect a power swing condition and then selectively, reliably, and dependably protect the source-end generator 108 during unstable power swings, and retain the source-end generator 108 in operation during stable power swings. In some embodiments, where the swing detection scheme determines that the disturbance in the system 100 is an unstable power swing, the device 120 protects the source-end generator 108 by triggering the alarm, generator circuit breaker trip action, or activating any other protection mechanism. The swing detection scheme is described in detail later in conjunction with Fig. 2.

In some embodiments, various components of the device 120 may communicate with each other via a communication bus 136 in the device 120. It should be noted that one or more components shown in Fig. 1 may be integrated into a single component. Also, the functionalities of a component of the device 120 may be segregated or distributed across multiple components. For example, some or all logic of the protection unit 112 may be stored in the storage unit 126 and processed in the processing unit 122. In some embodiments, the functionalities of the I/O unit 124 may be integrated into one or more modules of the protection unit 112, in which case the I/O unit 124 may be omitted.

As used herein, the term "unit" within the device 120 refers to any configuration of hardware, with or without software, which implements the functionality described in conjunction therewith using any solution. Regardless, it is understood that two or more units, modules, or systems may share some or all of their respective hardware or software. Further, while performing a process described herein, the device 120 may communicate with one or more other computing components using any type of communications link. In some embodiments, the communications link may include, but is not limited to, wired links such as optical fiber, or wireless links. Further, the system 100 may further include any combination of one or more types of networks, or utilize any combination of various types of transmission techniques and protocols.

Fig. 2 is a block diagram of a power swing detection device 200 (herein referred to as "device 200"), in accordance with one embodiment of the invention. The device 200 is similar to the device 120, except that a detailed view of the protection unit 112 is shown in Fig. 2. In some embodiments, various components of the device 120 may be equally implemented in the device 200. As shown in Fig. 2, in some embodiments, the protection unit 112 includes a voltage determination (VD) module 202 coupled to the I/O unit 124 and is configured to obtain a voltage phasor (Vs) of the source-end generator 108. The protection unit 112 further includes a current determination (CD) module 204 coupled to the I/O unit 124 and is configured to obtain a current phasor ($I_S$) of the source-end generator 108. In one embodiment, the VD module 202 and the CD module 204 are configured to receive $V_S$ and $I_S$, respectively, from the respective voltage and current transformers 114 and 116. Alternatively, in another embodiment, the VD module 202 and the CD module 204 may be integrated with the respective voltage and current transformers 114 and 116 to measure $V_S$ and $I_S$ directly. In yet another embodiment, a phasor measurement unit (PMU) may be used to measure phasor values such as $V_S$ and $I_S$. In such an embodiment, the voltage and current transformers 114 and 116 may be omitted or implemented in addition to the PMU.

In some embodiments, as shown in Fig. 2, the protection unit 112 further includes an impedance estimation (IE) module 206 coupled to the I/O unit 124 and is configured to estimate a transmission line impedance ($Z_L$) between a source-end generator and a receiving-end generator and furthermore, a receiving end generator impedance ($Z_R$). Various embodiments here consider X as the total reactance for detecting power swing since impedances are generally dominated by reactance instead of resistance. In one exemplary embodiment, the IE module 206 estimates $Z_L$ and $Z_R$ based on generator models and transmission line models. The respective models may be varied over the time as per the changes in the system. Any other known suitable estimation technique may be used to estimate $Z_L$ and $Z_R$ without deviating from the scope of the technique.

In some embodiments, as shown in Fig. 2, the protection unit 112 additionally includes a rotor angle determination (RAD) module 208 coupled to the I/O unit 124 and is configured to obtain a mechanical rotor angle ($\delta s$) of sending end generator 108 with respect to voltage $V_S$. In one exemplary embodiment, $\delta s$ may be obtained as a part of phasor values obtained using the PMU. In other embodiments, commercially available meters may be used to determine the mechanical rotor angle $\delta s$.

In some embodiments, as shown in Fig. 2, the protection unit 112 further includes a swing angle estimation (SAE) module 210 coupled to the modules 202, 204, 206 and 208. In one embodiment, the SAE module 210 is configured to estimate a swing angle ($\theta$) between $E_S$ and $E_R$ as a function of the obtained $V_S$, the obtained $I_S$ and the estimated $Z = Z_L + Z_R$. In another embodiment, the SAE module 210 is configured to estimate the value of $\theta$ as a function of obtained $\delta s$, in addition to the obtained $V_S$, the obtained $I_S$, and the estimated Z. In one embodiment, the value of $\theta$ may be derived from the equations of an internal voltage ($E_S$) of the source-end generator 108, real power (P) and reactive power (Q) given below:

$$E_s = V_s - I_s(Z_L + Z_R)..eq - 1$$

$$P + j.Q = |V_s|^2 - V_S.I_s^* \left( Z_L^* + Z_R^* \right).eq - 2$$

where $I_S^*$, $Z_L^*$ and $Z_R^*$ dare complex conjugates of $I_S$, $Z_L$ and $Z_R$ respectively. It should be noted that in equation 2 above, the real part of left hand side (LHS) would represent real power P and imaginary part of LHS would represented reactive power Q. The swing angle θ then may be determined as

$$\theta = atan2(Q, P) + \delta_s ...eq - 3$$

Further, a rate of change of θ ($\dot{\theta}$) may be determined as:

$$\dot{\theta} = 2 \times \left( \frac{P \times \dot{Q} - Q \times \dot{P}}{P^2 + Q^2} \right) ...eq - 4$$

where $\dot{P}$ and $\dot{Q}$ are the rate of change of P and Q respectively. $\dot{P}$ and $\dot{Q}$ may be determined using the following equations:

$$\dot{P} = \frac{P(t(k)) - P(t(k-1))}{t(k) - t(k-1)} ...eq - 5$$

$$\dot{Q} = \frac{Q(t(k)) - Q(t(k-1))}{t(k) - t(k-1)} ...eq - 6$$

where, P(t(k)) represents a real power measured at a time instance t(k), P(t(k-1)) represents a real power measured at a time instance t(k-1), t(k-1) is a time instance prior to t(k), Q(t(k)) represents a reactive power measured at the time instance t(k), and Q(t(k-1)) represents a reactive power measured at the time instance t(k-1).

It should be noted that the measured signals VS and IS may need to be converted into digital signals with analog to digital (A/D) converters. Furthermore, all the equations above may need to be converted into digital domain (e.g., z domain) for implementing in the processor.

In some embodiments, as shown in Fig. 2, the protection unit 112 further includes a detection module 212 coupled to the SAE module 210. The detection module 212 in such embodiments is configured to detect power swing based on the estimated θ. Any known technique of detecting power swing based on θ may be used herein without deviating from the scope of the invention. In one exemplary embodiment, a threshold value is defined and compared with the estimated θ. In such an embodiment, when θ exceeds this defined threshold value, the system is defined as out-of-step or unstable, as a result of which the circuit breaker 118 is tripped to isolate the source-end generator 108 from the rest of the system 100, or an alarm is triggered.

In some other embodiments, the SAE and detection modules 210 and 212 may use additional parameter(s) to detect power swing. In one such embodiment, the protection unit 112 includes a real power determination (real PD) module 214 and a reactive power determination (reactive PD) module 216. In one embodiment, the real PD module 214 is configured to determine P and the reactive PD module 216 is configured to determine a reactive power value Q based on the obtained $V_S$, $I_S$ and Z as explained with respect to equation 2.

The SAE module 210 may also be configured to estimate an additional parameter such as a rate of change of swing angle ($\dot{\theta}$) as a function of the P and Q determined using the modules 214 and 216, respectively, as explained with respect to equation 4.

In certain embodiments, the detection module 212 may be configured to detect the power swing based on the estimated θ and $\dot{\theta}$. Any known technique of detecting power swing based on θ and $\dot{\theta}$ may be used herein without deviating from the scope of the invention. In one exemplary embodiment, during a power swing, the swing energy transfers back and forth between θ and $\dot{\theta}$, therefore the power swing or an out-of-step condition may be detected using a weighted sum of the squares of θ and $\dot{\theta}$. In one such embodiment, power swing or out-of-step condition is determined when the below condition is met:

$$\left( \frac{\theta}{\theta_{max}} \right)^2 + \left( \frac{\dot{\theta}}{\dot{\theta}_{max}} \right)^2 > 1 ...eq - 7$$

where, $\theta_{max}$ and $\dot{\theta}_{max}$ are maximum allowed swing angle and maximum allowed rate of change of swing angle, respectively.

In some other embodiments, after detecting the power swing, the device 200 determines whether the power swing is stable or unstable. Any known technique may be used for determining stable or unstable power swing. In one exemplary embodiment, when $\theta$ increases for some time duration and then starts to decrease, such a power swing is determined as a stable swing. However, when $\theta$ increases continuously for the entire monitored time duration, such a power swing is determined as an unstable swing.

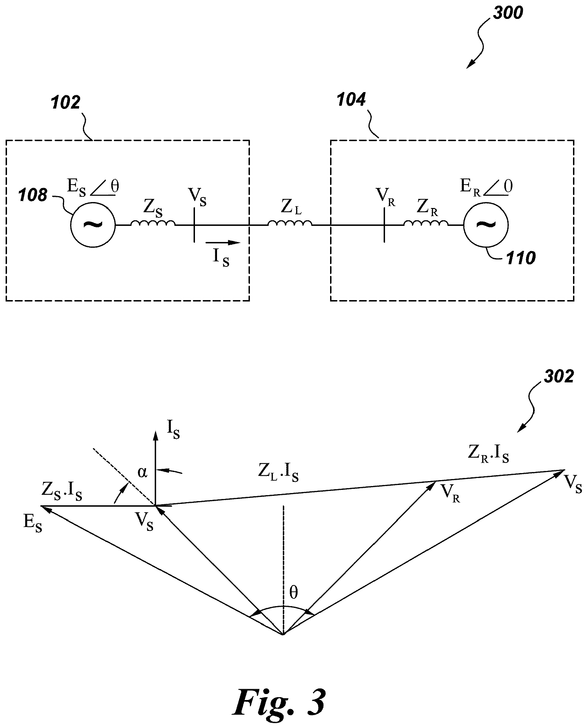

Fig. 3 represents a two-source system 300 and a vector phasor representation 302 of the two-source system 300, that is, the source-end 102 and the receiving-end 104, in accordance with one embodiment. The two-source system 300 is a configuration of a simplest network for studying the power swing phenomenon, as shown in Fig. 3. The source-end generator (108) internal voltage $E_S$ has a swing angle equal to $\theta$, and this angle may vary with respect to the receiving end generator (110) internal voltage $E_R$ during the power swing. The receiving-end generator 110 represents an infinite bus and $E_S$ is considered a reference voltage i.e., it is assumed that it not vary with time rather other phasors vary with respect to $E_S$. This simple network may be used to model the power swings taking place in more complex networks. In some embodiments, when the two-source system 300 loses stability and enters a power swing condition, the angle difference between the two sources 108 and 110, represented by $\theta$, may increase as a function of time.

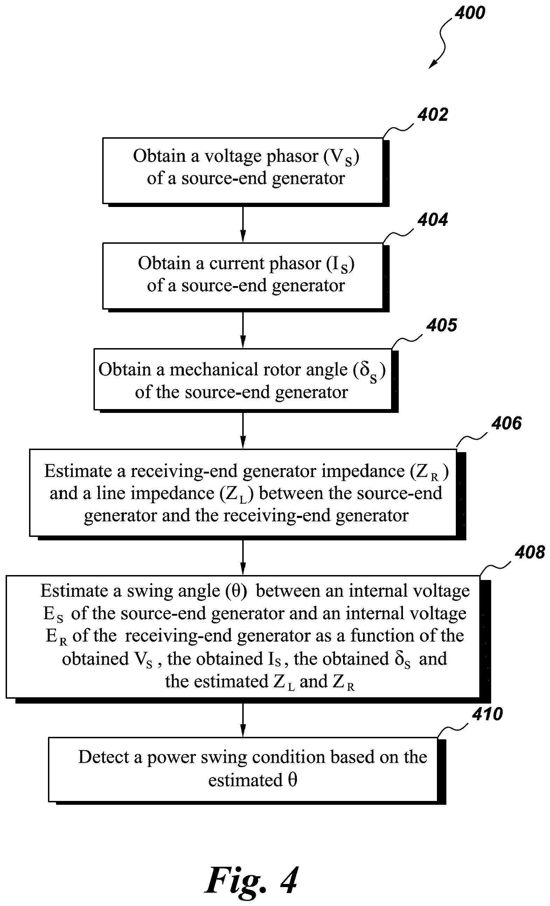

Fig. 4 is a flowchart depicting a method 400 for detecting power swing in an electrical power system (such as 100), in accordance with one embodiment of the invention. The method 400 detects power swing between a source-end generator (such as 108) and a receiving-end generator (such as one of the receiving-end generators 110) based on local measurements and one or more system parameters. In some embodiments, a power swing detection device (such as 120) including a protection unit (such as 112), for example, a relay may be provided with a swing detection scheme to detect power swing between the source-end generator and receiving-end generators. At steps 402 and 404, local measurements including a voltage phasor ($V_S$) and a current phasor ($I_S$) of the source-end generator are obtained. In some embodiments, a voltage determination (VD) module (such as 202) obtains $V_S$ and a current determination (CD) module (such as 204) obtains $I_S$. In one embodiment, the VD and CD modules are configured to receive $V_S$ and $I_S$, respectively, from respective current (such as 116) and voltage transformers (such as 114). Alternatively, in another embodiment, these modules may be integrated with the respective current and voltage transformers to measure $V_S$ and $I_S$ directly. In yet another embodiment, a phasor measurement unit (PMU) may be used to measure phasor values such as Vs and $I_S$. Furthermore, at step 405, a mechanical rotor angle ($\delta s$) is obtained. In one embodiment, a RAD module (such as 208) obtains $\delta s$.

Further, at step 406, a transmission line impedance ($Z_L$) between a source-end generator and a receiving-end generator and furthermore, a receiving end generator impedance ($Z_R$) is estimated. In one embodiment, an impedance estimation (IE) module (such as 206) estimates total impedance $Z = Z_L + Z_R$. The impedances $Z_L$ and $Z_R$ may be determined based on some modeling techniques or any other known estimation technique may be used to estimate $Z_L$ and $Z_R$ without deviating from the scope of the invention.

At step 408, a first swing angle ($\theta$) between $E_S$ and $E_R$ is estimated as a function of the obtained $V_S$, the obtained $I_S$, the obtained $\delta s$ and the estimated X. In one embodiment, a SAE module (such as 210) is used to estimate $\theta$ as a function of the obtained $V_S$, the obtained $I_S$ and the estimated $Z_L$ and $Z_R$. $\theta$ may be computed as described above in various embodiments of Fig. 2.

Finally, at step 410, the power swing is detected based on the estimated value of $\theta$. Any known technique of detecting power swing based on $\theta$ may be used herein without deviating from the scope of the invention. In one exemplary embodiment, a threshold value may be defined and a detection module (such as 212) may be used to compare the estimated $\theta$ with this threshold value. In such an embodiment, when the value of $\theta$ exceeds this defined threshold value, the system is determined to be out-of-step or unstable, as a result of which the circuit breaker 118 is tripped to isolate the source-end generator 108 from the rest of the system 100, or an alarm is triggered.

In some other embodiments, the SAE and detection modules may use additional parameter(s) such as a rate of change of swing angle ($\dot{\theta}$) as a function of the P and Q to detect power swing. $\dot{\theta}$ may be estimated as described above in various embodiments of Fig. 2. In certain embodiments, the detection module 212 may be configured to detect the power swing based on the estimated $\theta$ and $\dot{\theta}$. Any known technique of detecting power swing based on $\theta$ and $\dot{\theta}$ may be used herein without deviating from the scope of the invention. In one exemplary embodiment, power swing or out-of-step condition may be determined as per equation 7.

It is to be understood that a skilled artisan will recognize the interchangeability of various features from different embodiments and that the various features described may be mixed and matched by one of ordinary skill in this art to construct additional systems and techniques in accordance with principles of this disclosure.

## Claims

**1.** A method (400), comprising:

EP 3 012 963 B1

obtaining (402) a voltage phasor ($V_S$) of a source-end generator (108);
obtaining (404) a current phasor ($I_S$) of the source-end generator (108);
obtaining (405) a mechanical rotor angle ($\delta s$) of the source end generator (108);
estimating (406) a receiving end generator impedance ($Z_R$) and a line impedance ($Z_L$) between the source-end generator (108) and a receiving-end generator (110);
estimating (408) a swing angle ($\theta$) between an internal voltage $E_S$ of the source-end generator (108) and an internal voltage $E_R$ of the receiving-end generator (110), wherein the estimating (408) of the swing angle ($\theta$) comprises determining a real power value (P) and a reactive power value (Q) based on the obtained $V_S$ and the obtained Is and the estimated $Z_L$ and ZR; and
detecting (410) power swing condition based on the estimated $\theta$; and
tripping a circuit breaker to isolate the source-end generator from the rest of the system when the power swing condition is detected,
wherein the swing angle ($\theta$) is estimated using the following equations:

$$E_s = V_s - I_s(Z_L + Z_R).eq-1$$

$$P + j.Q = |V_s|^2 - V_S.I_s^*.\left(Z_L^* + Z_R^*\right).eq-2$$

$$\theta = atan2(Q,P) + \delta_s...eq-3,$$

wherein $I_S^*$, $Z_L^*$ and $Z_R^*$ are complex conjugates of $I_S$, $Z_L$ and $Z_R$ respectively.

2. The method of claim 1, further comprising estimating a rate of change of swing angle ($\dot{\theta}$).

3. The method of claim 2, wherein estimating the rate of change of swing angle comprises estimating the rate of change of swing angle ($\dot{\theta}$) as a function of the mechanical rotor angle ($\delta s$), the determined P and the determined Q.

4. The method of claim 3, wherein the detecting (410) the power swing condition comprises detecting the power swing condition based on the estimated $\theta$ and $\dot{\theta}$.

5. The method of any preceding claim, further comprising operating a protection mechanism (112) to isolate the source-end generator (108) from the rest of the system when the power system condition is out of step condition.

6. A power swing detection device (120,200), comprising:

a voltage determination module (202) configured to obtain a voltage phasor ($V_S$) of a source-end generator (108);
a current determination module (204) configured to obtain a current phasor ($I_S$) of the source-end generator (108);
a rotor angle determination module (208) configured to obtain a mechanical rotor angle ($\delta s$) of the source end generator (108);
an impedance estimation module (206) configured to estimate a receiving end generator impedance ($Z_R$) and a line impedance ($Z_L$) between the source-end generator (108) and a receiving-end generator (110);
a swing angle estimation module (210) configured to estimate a swing angle ($\theta$) between an internal voltage $E_S$ of the source-end generator (108) and an internal voltage $E_R$ of the receiving-end generator (110), the swing angle estimation module (210) including a real power determination module (214) configured to determine a real power value (P) based on the obtained $V_S$ and the obtained $I_S$ and the estimated $Z_L$ and $Z_R$ and a reactive power determination module (216) configured to determine a reactive power value (Q) based on the obtained $V_S$ and the obtained $I_S$ and the estimated $Z_L$ and $Z_R$, wherein the estimating of the swing angle ($\theta$) by the swing angle estimation module (210) comprises determining the real power value (P) by the real power determination module (214) and determining the reactive power value (Q) by the reactive power determination module (216);
a detection module (212) configured to detect a power swing condition based on the estimated $\theta$, and to trip the circuit breaker (118) to isolate the source-end generator (108),
wherein the swing angle estimation module (210) is configured to estimate the swing angle ($\theta$) using the following equations:

$$E_s = V_s - I_s(Z_L + Z_R)..eq-1$$

$$P + j.Q = |V_s|^2 - V_S.I_s^* .\left(Z_L^* + Z_R^*\right).eq-2$$

$$\theta = atan2(Q,P) + \delta_s...eq-3,$$

wherein $I_S^*$, $Z_L^*$ and $Z_R^*$ are complex conjugates of $I_S$, $Z_L$ and $Z_R$ respectively.

7.  The power swing detection device of claim 6, wherein the swing angle estimation module (210) is configured to estimate a rate of change of swing angle ($\dot{\theta}$) as a function of the determined P and the determined Q.

8.  The power swing detection device of claim 7, wherein the detection module (212) is configured to detect the power swing condition based on the estimated θ and estimated $\dot{\theta}$.

9.  The power swing detection device of any of claims 6 to 8, further comprising a protection mechanism (112) to isolate the source-end generator (108) from the rest of the system when the power system condition is out of step condition.

10. An electrical power system, comprising:

    a receiving-end generator (100);
    a source-end generator (108) configured to be electrically coupled to the receiving-end generator; and
    a power swing detection device as defined in any of claims 6 to 9.

**Patentansprüche**

1.  Verfahren (400), umfassend:

    Erhalten (402) eines Spannungsphasors ($V_S$) eines Quellenendgenerators (108);
    Erhalten (404) eines Stromphasors ($I_S$) des Quellenendgenerators (108);
    Erhalten (405) eines mechanischen Rotorwinkels ($\delta_s$) des Quellenendgenerators (108);
    Schätzen (406) einer Emfangsendgeneratorimpedanz ($Z_R$) und einer Leitungsimpedanz ($Z_L$) zwischen dem Quellenendgenerator (108) und einem Emfangsendgenerator (110);
    Schätzen (408) eines Pendelwinkels (θ) zwischen einer internen Spannung $E_S$ des Quellenendgenerators (108) und einer internen Spannung $E_R$ des Emfangsendgenerators (110), wobei das Schätzen (408) des Pendelwinkels (θ) Bestimmen eines Wirkleistungswerts (P) und eines Blindleistungswerts (Q) basierend auf dem erhaltenen $V_S$ und dem erhaltenen $I_S$ und der geschätzten $Z_L$ und ZR umfasst; und
    Detektieren (410) von Pendelbedingung basierend auf dem geschätzten θ; und
    Auslösen eines Schutzschalters zum Isolieren des Quellenendgenerators von dem Rest des Systems, wenn die Pendelbedingung detektiert wird,
    wobei der Pendelwinkel (θ) unter Verwendung der folgenden Gleichungen geschätzt wird:

$$E_s = V_s - I_s(Z_L + Z_R) \dots Gl.-1$$

$$P + j.Q = |V_s|^2 - V_S.I_S^*.(Z_L^* + Z_R^*) \dots Gl.-2$$

$$\theta = atan2(Q,P) + \delta_s \dots Gl.-3,$$

wobei $I_S^*$, $Z_L^*$ und $Z_R^*$ komplexe Konjugate von $I_S$, $Z_L$ bzw. $Z_R$ sind.

**2.** Verfahren nach Anspruch 1, weiter umfassend Schätzen einer Änderungsrate von Pendelwinkel ($\dot\theta$).

**3.** Verfahren nach Anspruch 2, wobei Schätzen der Änderungsrate von Pendelwinkel Schätzen der Änderungsrate von Pendelwinkel ($\dot\theta$) als eine Funktion des mechanischen Rotorwinkels ($\delta_s$), des bestimmten P und des bestimmten Q umfasst.

**4.** Verfahren nach Anspruch 3, wobei das Detektieren (410) der Pendelbedingung Detektieren der Pendelbedingung basierend auf dem geschätzten $\theta$ und $\dot\theta$ umfasst.

**5.** Verfahren nach einem der vorstehenden Ansprüche, weiter umfassend Betreiben eines Schutzmechanismus (112) zum Isolieren des Quellenendgenerators (108) von dem Rest des Systems, wenn die Leistungssystembedingung eine Außer-Tritt-Bedingung ist.

**6.** Pendeldetektierungsvorrichtung (120,200), umfassend:

ein Spannungsbestimmungsmodul (202), das konfiguriert ist, einen Spannungsphasor ($V_S$) eines Quellenendgenerators (108) zu erhalten;
ein Strombestimmungsmodul (204), das konfiguriert ist, einen Stromphasor ($I_S$) des Quellenendgenerators (108) zu erhalten;
ein Rotorwinkelbestimmungsmodul (208), das konfiguriert ist, einen mechanischen Rotorwinkel ($\delta_s$) des Quel-lenendgenerators (108) zu erhalten;
ein Impedanzschätzmodul (206), das konfiguriert ist, eine Emfangsendgeneratorimpedanz ($Z_R$) und eine Leitungsimpedanz ($Z_L$) zwischen dem Quellenendgenerator (108) und einem Emfangsendgenerator (110) zu schätzen;
ein Pendelwinkelschätzmodul (210), das konfiguriert ist, einen Pendelwinkel ($\theta$) zwischen einer internen Span-nung $E_S$ des Quellenendgenerators (108) und einer internen Spannung $E_R$ des Emfangsendgenerators (110) zu schätzen, wobei das Pendelwinkelschätzmodul (210) ein Wirkleistungsbestimmungsmodul (214) beinhaltet, das konfiguriert ist, einen Wirkleistungswert (P) basierend auf dem erhaltenen $V_S$ und dem erhaltenen $I_S$ und der geschätzten $Z_L$ und ZR zu bestimmen, und ein Blindleistungsbestimmungsmodul (216), das konfiguriert ist, einen Blindleistungswert (Q) basierend auf dem erhaltenen $V_S$ und dem erhaltenen $I_S$ und der geschätzten $Z_L$ und $Z_R$ zu bestimmen, wobei das Schätzen des Pendelwinkels($\theta$) durch das Pendelwinkelschätzmodul (210) Bestimmen des Wirkleistungswerts (P) durch das Wirkleistungsbestimmungsmodul (214) und Bestimmen des Blindleistungswerts (Q) durch das Blindleistungsbestimmungsmodul (216) umfasst;
ein Detektionsmodul (212), das konfiguriert ist, eine Pendelbedingung basierend auf dem geschätzten $\theta$ zu detektieren und einen Schutzschalter (118) zum Isolieren des Quellenendgenerators (108) auszulösen,
wobei das Pendelwinkelschätzmodul (210) konfiguriert ist, den Pendelwinkel ($\theta$) unter Verwendung der folgen-den Gleichungen zu schätzen:

$$E_s = V_S - I_s(Z_L + Z_R) \dots Gl.-1$$

$$P + j.Q = |V_s|^2 - V_S.I_S^*.(Z_L^* + Z_R^*) \dots Gl.-2$$

$$\theta = atan2(Q,P) + \delta_s \dots Gl.-3,$$

wobei $I_S^*$, $Z_L^*$ und $Z_R^*$ komplexe Konjugate von $I_S$, $Z_L$ bzw. $Z_R$ sind.

**7.** Pendeldetektionsvorrichtung nach Anspruch 6, wobei das Pendelwinkelschätzmodul (210) konfiguriert ist, eine Änderungsrate von Pendelwinkel ($\dot\theta$) als eine Funktion des bestimmten P und des bestimmten Q zu schätzen.

**8.** Pendeldetektionsvorrichtung nach Anspruch 7, wobei das Detektionsmodul (212) konfiguriert ist, die Pendelbedingung basierend auf dem geschätzten $\theta$ und geschätzten $\dot\theta$ zu detektieren.

**9.** Pendeldetektionsvorrichtung nach einem der Ansprüche 6 bis 8, weiter umfassend einen Schutzmechanismus (112) zum Isolieren des Quellenendgenerators (108) von dem Rest des Systems, wenn die Leistungssystembedingung eine Außer-Tritt-Bedingung ist.

10. Stromsystem, umfassend:

einen Empfangsendgenerator (100);
einen Quellenendgenerator (108), der konfiguriert ist, elektrisch an den Empfangsendgenerator gekoppelt zu werden; und
eine Pendeldetektionsvorrichtung wie in einem von Ansprüchen 6 bis 9 definiert.

**Revendications**

1. Procédé (400), comprenant :

l'obtention (402) d'un phaseur de tension ($V_S$) d'un générateur d'extrémité de source (108) ;
l'obtention (404) d'un phaseur de courant ($I_S$) du générateur d'extrémité de source (108) ;
l'obtention (405) d'un angle de rotor mécanique ($\delta_S$) du générateur d'extrémité de source (108) ;
l'estimation (406) d'une impédance de générateur d'extrémité de réception ($Z_R$) et d'une impédance de ligne ($Z_L$) entre le générateur d'extrémité de source (108) et un générateur d'extrémité de réception (110) ;
l'estimation (408) d'un angle d'oscillation ($\theta$) entre une tension interne $E_S$ du générateur d'extrémité de source (108) et une tension interne $E_R$ du générateur d'extrémité de réception (110), dans lequel l'estimation (408) de l'angle d'oscillation ($\theta$) comprend la détermination d'une valeur de puissance réelle (P) et d'une valeur de puissance réactive (Q) sur la base du $V_S$ obtenu et de l'$I_S$ obtenu et des $Z_L$ et $Z_R$ estimées ; et
la détection (410) d'une condition d'oscillation de puissance sur la base du $\theta$ estimé ; et
le déclenchement d'un disjoncteur pour isoler le générateur d'extrémité de source du reste du système lorsque la condition d'oscillation de puissance est détectée,
dans lequel l'angle d'oscillation ($\theta$) est estimé en utilisant les équations suivantes :

$$E_s = V_s - I_s(Z_L + Z_R)..eq-1$$

$$P + j.Q = |V_s|^2 - V_s.I_s^* .\left(Z_L^* + Z_R^*\right).eq-2$$

$$\theta = atan2(Q, P) + \delta_s ...eq-3 \, ,$$

dans lesquelles $I_s^*$, $Z_L^*$ et $Z_R^*$ sont des conjugués complexes de $I_s$, $Z_L$ et $Z_R$ respectivement.

2. Procédé selon la revendication 1, comprenant en outre l'estimation d'une cadence de changement de l'angle d'oscillation ($\dot{\theta}$).

3. Procédé selon la revendication 2, dans lequel l'estimation de la cadence de changement d'angle d'oscillation comprend l'estimation de la cadence de changement d'angle d'oscillation ($\dot{\theta}$) en fonction de l'angle de rotor mécanique ($\delta_s$), du P déterminé et du Q déterminé.

4. Procédé selon la revendication 3, dans lequel la détection (410) de la condition d'oscillation de puissance comprend la détection de la condition d'oscillation de puissance sur la base des $\theta$ et $\dot{\theta}$ estimés.

5. Procédé selon une quelconque revendication précédente, comprenant en outre l'exploitation d'un mécanisme de protection (112) pour isoler le générateur d'extrémité de source (108) du reste du système lorsque la condition de système de puissance est une condition déphasée.

6. Dispositif de détection d'oscillation de puissance (120, 200), comprenant :

un module de détermination de tension (202) configuré pour obtenir un phaseur de tension ($V_S$) d'un générateur d'extrémité de source (108) ;
un module de détermination de courant (204) configuré pour obtenir un phaseur de courant ($I_S$) d'un générateur d'extrémité de source (108) ;

un module de détermination d'angle de rotor (208) configuré pour obtenir un angle de rotor mécanique ($\delta_s$) du générateur d'extrémité de source (108) ;

un module d'estimation d'impédance (206) configuré pour estimer une impédance de générateur d'extrémité de réception ($Z_R$) et une impédance de ligne ($Z_L$) entre le générateur d'extrémité de source (108) et un générateur d'extrémité de réception (110) ;

un module d'estimation d'angle d'oscillation (210) configuré pour estimer un angle d'oscillation ($\theta$) entre une tension interne $E_S$ du générateur d'extrémité de source (108) et une tension interne $E_R$ du générateur d'extrémité de réception (110), le module d'estimation d'angle d'oscillation (210) incluant un module de détermination de puissance réelle (214) configuré pour déterminer une valeur de puissance réelle (P) sur la base du $V_S$ obtenu et de l'$I_S$ obtenu et des $Z_L$ et $Z_R$ estimées et un module de détermination de puissance réactive (216) configuré pour déterminer une valeur de puissance réactive (Q) sur la base du $V_S$ obtenu et de l'$I_S$ obtenu et des $Z_L$ et $Z_R$ estimées, dans lequel l'estimation de l'angle d'inclinaison ($\theta$) par le module d'estimation d'angle d'oscillation (210) comprend la détermination de la valeur de puissance réelle (P) par le module de détermination de puissance réelle (214) et la détermination de la valeur de puissance réactive (Q) par le module de détermination de puissance réactive (216) ;

un module de détection (212) configuré pour détecter une condition d'oscillation de puissance sur la base du $\theta$ estimé, et pour déclencher le disjoncteur (118) pour isoler le générateur d'extrémité de source (108) ;

dans lequel le module d'estimation d'angle d'inclinaison (210) est configuré pour estimer l'angle d'inclinaison ($\theta$) à l'aide des équations suivantes :

$$E_s = V_s - I_s(Z_L + Z_R)..eq-1$$

$$P + j.Q = |V_s|^2 - V_S.I_s^* .\left(Z_L^* + Z_R^*\right).eq-2$$

$$\theta = atan2(Q, P) + \delta_s ...eq-3 ,$$

dans lesquelles $I_s^*$, $Z_L^*$ et $Z_R^*$ sont des conjugués complexes de $I_s$, $Z_L$ et $Z_R$ respectivement.

**7.** Dispositif de détection d'oscillation de puissance selon la revendication 6, dans lequel le module d'estimation d'angle d'oscillation (210) est configuré pour estimer une cadence de changement d'angle d'oscillation ($\dot{\theta}$) en fonction du P déterminé et du Q déterminé.

**8.** Dispositif de détection d'oscillation de puissance selon la revendication 7, dans lequel le module de détection (212) est configuré pour détecter la condition d'oscillation de puissance sur la base du $\theta$ estimé et du $\dot{\theta}$ estimé.

**9.** Dispositif de détection d'oscillation de puissance selon l'une quelconque des revendications 6 à 8, comprenant en outre un mécanisme de protection (112) pour isoler le générateur d'extrémité de source (108) du reste du système lorsque la condition de système de puissance est une condition déphasée.

**10.** Système électrique, comprenant :

un générateur d'extrémité de réception (100) ;
un générateur d'extrémité de source (108) configuré pour être couplé électriquement au générateur d'extrémité de réception ; et
un dispositif de détection d'oscillation de puissance tel que défini dans l'une quelconque des revendications 6 à 9.

*Fig. 1*

EP 3 012 963 B1

**Fig. 2**

EP 3 012 963 B1

300

102

104

108 $E_S \angle \theta$

$Z_S$

$V_S$

$Z_L$

$V_R$

$Z_R$

$E_R \angle 0$

$I_S$

110

302

$I_S$

$Z_L.I_S$

$Z_R.I_S$

$Z_S.I_S$

$\alpha$

$V_R$

$V_S$

$E_S$

$V_S$

$\theta$

*Fig. 3*

_400_

_402_

Obtain a voltage phasor ($V_S$)
of a source-end generator

_404_

Obtain a current phasor ($I_S$)
of a source-end generator

_405_

Obtain a mechanical rotor angle ($\delta_S$)
of the source-end generator

_406_

Estimate a receiving-end generator impedance ($Z_R$)
and a line impedance ($Z_L$) between the source-end
generator and the receiving-end generator

_408_

Estimate a swing angle ($\theta$) between an internal voltage
$E_S$ of the source-end generator and an internal voltage
$E_R$ of the receiving-end generator as a function of the
obtained $V_S$, the obtained $I_S$, the obtained $\delta_S$ and
the estimated $Z_L$ and $Z_R$

_410_

Detect a power swing condition based on the
estimated $\theta$

# Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0869599 A